# EUROPÄISCHE PATENTSCHRIFT

(11) **EP 0 824 419 B1**
(45) Veröffentlichungstag und Bekanntmachung des Hinweises auf die Patenterteilung: **11.11.1998**
(21) Anmeldenummer: 96911911.4
(22) Anmeldetag: 24.04.1996
(51) Int. Cl.: B60R 21/16

(54) **AUFPRALLSCHUTZVORRICHTUNG, INSBESONDERE FÜR INSASSEN VON FAHRZEUGEN**
COLLISION PROTECTION DEVICE, ESPECIALLY FOR VEHICLE PASSENGERS
DISPOSITIF DE PROTECTION EN CAS DE COLLISION POUR LES PASSAGERS DE VEHICULES

(30) Priorität: 28.04.1995 DE 19515232
(43) Veröffentlichungstag der Anmeldung: 25.02.1998
(73) Patentinhaber: DAIMLER-BENZ AKTIENGESELLSCHAFT, 70567 Stuttgart (DE); Petri AG, D-63743 Aschaffenburg (DE); PHOENIX AIRBAG GmbH & Co. KG, 31137 Hildesheim (DE)
(72) Erfinder: TSCHÄSCHKE, Ulrich, D-71139 Ehningen (DE); REH, Stefan, D-63939 Wörth (DE); GUMPRECHT, Michael, D-31174 Schellerten (DE)
(74) Vertreter: Schmidt-Bogatzky, Jürgen, Dr. Ing.
(86) Internationale Anmeldenummer: DE9600710
(87) Internationale Veröffentlichungsnummer: WO9633887

(56) Entgegenhaltungen:
- DE-A- 4 033 835
- GB-A- 2 277 719
- US-A- 5 378 011

## Beschreibung

Die Erfindung betrifft eine Aufprallschutzvorrichtung für Insassen von Fahrzeugen, insbesondere wiederum von Kraftfahrzeugen, bestehend aus Polster bzw. Abdeckkappe, Luftsack (Airbag), Befestigungsteil (z.B. Halteblech), elektronischen oder mechanischen Einrichtungen und Gasgenerator; wobei der Luftsack aus Gewebe (z.B. Polyamidgewebe) mit oder ohne Beschichtung aus einem Unterteil mit Gaseinströmöffnung, das ggf. mit einem Flammschutz ausgerüstet ist, einem Oberteil (Personenaufprallseite) und einem Fangband oder mehreren Fangbändern, das/die ein- oder mehrlagig ausgeführt ist/sind, besteht; wobei die Enden des Fangbandes bzw. der Fangbänder mit dem Oberteil, dem Unterteil, anderen Bauteilen oder - bei mehrteiligen Fangbändern - miteinander mit Nähnähten verbunden sind.

Luftsäcke für das Airbagsystem in Kraftfahrzeugen gemäß dem Stand der Technik weisen zumeist wenigstens ein Fangband auf, welches sowohl das Entfaltungsverhalten als auch die Form des Luftsackes im aufgeblasenen Zustand dahingehend beeinflussen, daß eine Abflachung in Richtung auf den zu schützenden Fahrzeuginsassen die beabsichtigte Schutzfunktion für diesen verbessert. Bekannte Ausführungen solcher Luftsacke haben dabei häufig mehrere Fangbänder (DE-A-44 12 829, US-A-5 205 584), deren Enden gemeinsam mit anderen Bauteilen (z.B. Flammschutz) verbunden sind (US-A-5 033 771, US-A-5 078 423).

Es ist ferner bekannt, daß die jeweiligen Enden des Fangbandes bzw. der Fangbänder mit dem Oberteil, dem Unterteil, anderen Bauteilen oder - bei mehrteiligen Fangbändern (DE-A-44 42 592) - miteinander mit Nähnähten (DE-A-43 01 711) verbunden sind.

Eine weitere Aufprallschutzvorrichtung ist durch die DE-A-40 33 835 bekannt. Bei dieser bestehen die Fangbänder aus zwei rechtwinklig zueinander angeordneten Verbindungsschenkeln, die über ein allgemein kreisförmig genähtes Teil miteinander verbunden sind. Dieses Teil wird am Oberteil durch Nähnähte befestigt. Die Verbindungsschenkel müssen um 90° heruntergeklappt werden, wobei deren Enden mit Verbindungsstücken vernäht werden. die am Unterteil befestigt werden. Die Montage dieser Aufprallschutzvorrichtung ist relativ aufwendig. Außerdem besteht die Gefahr, daß bei hohen Belastungen im Bereich der Verbindungsstücke die Verbindungen zerstört werden, was die Funktion des betreffenden Fangbandes beeinträchtigt oder aufhebt.

Die Aufgabe der Erfindung besteht darin, hochbelastete Fangbandkonstruktionen in Aufprallschutzvorrichtungen der vorbeschriebenen Art mittels entsprechend gestalteter Anbindungen, insbesondere am Ober- und Unterteil, zu ermöglichen.

Erfindungsgemäß enfolgt die Lösung der Aufgabe durch die kennzeichnenden Merkmale der Ansprüche 1 und 2. Vorteilhafte Ausgestaltungen der Erfindung werden in den abhängigen Ansprüchen beschrieben.

Die Nähnähte weisen dabei entweder geschlossene Kurvenverläufe auf oder sind zur kraftabgewandten Seite offen.

Die Nähnähte können Einfach- oder Mehrfachnähte (hier wiederum insbesondere Doppelnähte) sein, wobei über den Abstand der Mehrfachnähte zueinander das Tragverhalten der Verbindungsstelle bestimmt ist.

Ferner ist es von Vorteil, wenn über die Stichlänge in den Nähnähten ebenfalls das Tragverhalten der Verbindungsstelle bestimmt ist.

Weiterhin ist es zweckmäßig, wenn die Nahtform so gewählt ist, daß das Fangband unter Krafteinwirkung in Längsrichtung zuerst im mittleren Bereich seines Querschnitts belastet wird. Ferner sollte die Nahtgestalt eine kraftflußgünstige Form des unter Krafteinwirkung stehenden Fangbandes bewirken.

Die Erfindung wird nun anhand von Ausführungsbeispielen unter Bezugnahme auf schematische Zeichnungen erläutert. Es zeigen:
- Fig. 1: eine Schnittdarstellung eines Fangbandes in einer Aufprallschutzvorrichtung und zwar in Verbindung mit den Fig. 2a und 3;
- Fig.2a: eine im wesentlichen ovalförmig verlaufende Nähnaht, und zwar als geschlossene Doppelnaht ausgeführt;
- Fig.2b: eine geschlossene kreisförmige Nähnaht, und zwar als Einfachnaht ausgeführt;
- Fig.3: eine im wesentlichen ovalförmig verlaufende Nähnaht, die zur kraftabgewandten Seite offen ist, und zwar als Doppelnaht ausgeführt;
- Fig.4: eine räumliche Darstellung eines belasteten Fangbandes.

Im Hinblick auf diese Figuren gilt folgende Bezugsziffernliste:
- 1, 1'''': Oberteil
- 2, 2', 2'', 2''', 2'''': Unterteil
- 3, 3', 3'' 3''', 3'''': Fangband
- 4, 4', 4'', 4''', 4'''': Nähnähte

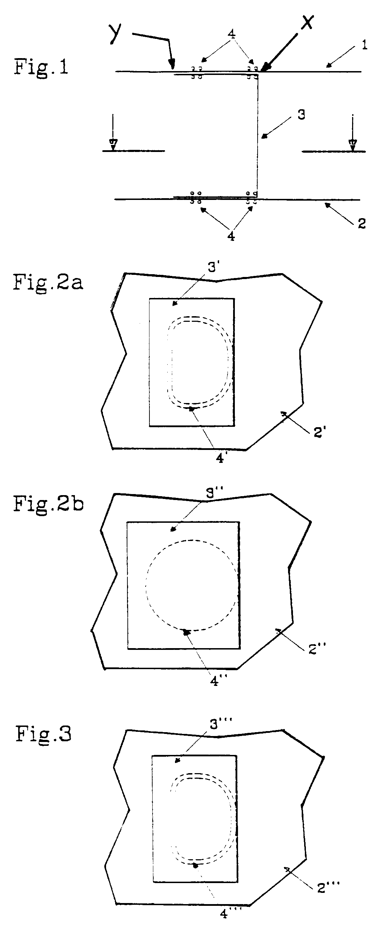

Nach **Fig.1** besteht der Luftsack aus einem Oberteil **1**, einem Unterteil **2** und einem einlagigen Fangband **3**, das entsprechende Gewebeabschnitte besitzt, die die beiden Enden des Fangbandes bilden, wobei die Enden mit dem Oberteil bzw. Unterteil mit Nähnähten **4** verbunden sind. Im Belastungsfall muß nun die entstehende Kraft über die Form des Fangbandes und über deren Anbindungsstellen auf die damit verbundenen Bauteile (hier Ober- und Unterteil) mit ausreichender Sicherheit übertragen werden. Bekanntermaßen tritt bei zu abrupten Kraftübergängen eine Gefahr der Schädigung der Bauteile als auch der Anbindungsstellen auf. Bei Belastung des Fangbandes treten dabei im Bereich X (kraftzugewandte Seite) besonders hohe Kräfte auf, während sich im Bereich Y (kraftabgewandte Seite) die Kräfte am geringsten auswirken.

**Fig.2a** zeigt nun eine geschlossene Doppelnaht **4**', die im wesentlichen ovalförmig verläuft, deren kraftzugewandte Seite jedoch stärker rund ausgebildet ist als deren kraftabgewandte Seite. Die Nahtform ist also so gewählt, daß das Fangband **3**' unter Krafteinwirkung in Längsrichtung zuerst im mittleren Bereich seines Querschnirtes belastet wird. Außerdem bewirkt diese Nahtgestalt eine kraftflußgünstige Form des unter Krafteinwirkung stehenden Fangbandes.

**Fig. 2b** zeigt eine geschlossene kreisförmige Einfachnaht **4**'', wobei das gesamte Nahtsystem zur kraftzugewandten Seite verlagert ist. Hinsichllich der Bedeutung dieser Nahtform für das Fangband **3**'' wird auf die Beschreibung der **Fig. 2a** verwiesen.

Nach **Fig. 3** ist die Doppelnaht **4**''' zur kraftabgewandten Seite offen, wobei hinsichtlich der Nahtform und deren Bedeutung für das Fangband **3**''' ebenfalls auf die Beschreibung der **Fig. 2a** verwiesen wird.

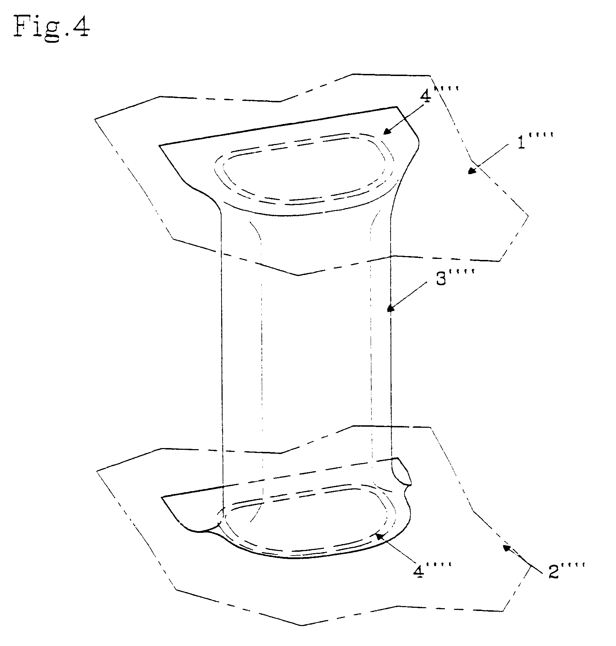

**Fig. 4** zeigt nun die räumliche Darstellung eines belasteten Fangbandes **3**'''' mit geschlossener Doppelnaht **4**'''' im Bereich der Anbindungsstellen von Oberteil **1**'''' und Unterteil **2**''''.

## Patentansprüche

1. Aufprallschutzvorrichtung für Insassen von Fahrzeugen, insbesondere von Kraftfahrzeugen, bestehend aus
- Polster bzw. Abdeckkappe, Luftsack, Befestigungsteil, elektronischen oder mechanischen Einrichtungen und Gasgenerator; wobei
- der Luftsack aus Gewebe mit oder ohne Beschichtung aus einem Unterteil (2, 2', 2'', 2''', 2'''') mit Gaseintrittsöffnung, das gegebenenfalls mit einem Flammschutz ausgerüstet ist, einem Oberteil (1, 1'''') als Personenaufprallseite und einem Fangband (3, 3', 3'', 3''', 3'''') oder mehreren Fangbändern, das/die ein- oder mehrlagig ausgeführt ist/sind, besteht; wobei
- die Enden des Fangbandes (3, 3', 3'', 3''', 3'''') bzw. der Fangbänder mit dem Oberteil (1, 1''''), dem Unterteil (2, 2', 2'', 2''', 2''''), anderen Bauteilen oder- bei mehrteiligen Fangbändern - miteinander mit Nähnähten verbunden sind,
dadurch gekennzeichnet, daß die Nähnähte (4, 4', 4'', 4''', 4'''') jeweils innerhalb der Enden des Fangbandes (3, 3', 3'', 3''', 3'''') bzw der Fangbänder im wesentlichen kreis- oder ovalförmig mit einem geschlossenen Kurvenverlauf ausgebildet sind.

2. Aufprallschutzvorrichtung für Insassen von Fahrzeugen, insbesondere von Kraftfahrzeugen, bestehend aus
- Polster bzw. Abdeckkappe, Luftsack, Befestigungsteil, elektronischen oder mechanischen Einrichtungen und Gasgenerator; wobei
- der Luftsack aus Gewebe mit oder ohne Beschichtung aus einem Unterteil (2, 2', 2'', 2''', 2'''') mit Gaseintrittsöffnung, das gegebenenfalls mit einem Flammschutz ausgerüstet ist, einem Oberteil (1, 1'''') als Personenaufprallseite und einem Fangband (3, 3', 3'', 3''', 3'''') oder mehreren Fangbändern, das/die ein- oder mehrlagig ausgeführt ist/sind, besteht; wobei
- die Enden des Fangbandes (3, 3', 3'', 3''', 3'''') bzw. der Fangbänder mit dem Oberteil (1, 1''''), dem Unterteil (2, 2', 2'', 2''', 2''''), anderen Bauteilen oder - bei mehrteiligen Fangbändern - miteinander mit Nähnähten verbunden sind,
dadurch gekennzeichnet, daß die Nähnähte (4, 4', 4'', 4''', 4'''') jeweils innerhalb der Enden des Fangbandes (3, 3', 3'', 3''', 3'''') bzw. der Fangbänder im wesentlichen kreis- oder ovalförmig mit einem zur kraftabgewandten Seite offenen Kurvenverlauf ausgebildet sind.

3. Aufprallschutzvorrichtung nach Anspruch 1 oder 2, dadurch gekennzeichnet, daß die Nähnähte (4'') Einfachnähte sind.

4. Aufprallschutzvorrichtung anch Anspruch 1 oder 2, dadurch gekennzeichnet, daß die Nähnähte (4, 4', 4''', 4'''') Mehrfachnähte, insbesondere Doppelnähte, sind.

5. Aufprallschutzvorrichtung nach Anspruch 4, dadurch gekennzeichnet, daß über den Abstand der Mehnfachnähte (4, 4'', 4''', 4'''') zueinander das Tragverhalten der Verbindungsstelle bestimmt ist.

6. Aufprallschutzvorrichtung nach einem der Ansprüche 1 bis 5, dadurch gekennzeichnet, daß über die Stichlänge in den Nähnähten (4, 4', 4'', 4''', 4'''') das Tragverhalten der Verbindungsstelle bestimmt ist.

7. Aufprallschutzvorrichtung nach einem der Ansprüche 1 bis 6, dadurch gekennzeichnet, daß die Nahtform so gewählt ist, daß das Fangband (3, 3', 3'', 3''', 3'''') unter Krafteinwirkung in Längsrichtung zuerst im mittleren Bereich seines Querschnitts belastet ist.

8. Aufprallschutzvorrichtung nach einem der Ansprüche 1 bis 7, dadurch gekennzeichnet, daß die Nahtgestalt eine kraftflußgünstige Form des unter Krafteinwirkung stehenden Fangbandes (3, 3', 3'', 3''', 3'''') bewirkt.

## Claims

1. A device for protecting passengers in vehicles, in particular motor cars, in the event of collision, consisting of
- a cushion or cover plate, an airbag, a securing component, electronic or mechanical devices and a gas generator, in which
- the air-bag consists of a coated or uncoated fabric, a lower section (2, 2', 2'', 2''', 2'''') with a gas inlet orifice which may be fitted with a flame guard if necessary, an upper section (1, 1''''), this being the face with which the person will collide, and a safety stop band (3, 3', 3'', 3''', 3'''') or several safety stop bands made of one or more layers; in which
- the ends of the safety stop band (3, 3', 3'', 3''', 3'''') or safety stop bands are joined to the upper section (1, 1''''), the lower section (2, 2', 2'', 2''', 2''''), other components or - in the case of multi-layer safety stop bands - to one another by stitched seams,
characterised in that within the respective ends of the safety stop band (3, 3', 3'', 3''', 3'''') or safety stop bands, the stitched seams (4, 4', 4'', 4''', 4'''') are essentially circular or oval-shaped with a closed curvature.

2. A collision protection device for passengers in vehicles, in particular motor cars, consisting of
- a cushion or cover plate, an airbag, a securing component, electronic or mechanical devices and gas generator; in which
- the airbag consists of a coated or uncoated fabric, a lower section (2, 2', 2'', 2''', 2'''') with a gas inlet orifice, which may be fitted with a flame guard if necessary, an upper section (1, 1''''), this being the face with which the person will collide, and a safety stop band (3, 3', 3'', 3''', 3'''') or several safety stop bands, which is/are of one or more layers; in which
- the ends of the safety stop band (3, 3', 3'', 3''', 3'''') or safety stop bands are joined to the upper section (1, 1''''), the lower section (2, 2', 2'', 2''', 2''''), other components or - in the case of multi-part safety stop bands - to one another by stitched seams,
characterised in that within the respective ends of the safety stop band (3, 3', 3'', 3''', 3'''') or safety stop bands, the stitched seams (4, 4', 4'', 4''', 4'''') are essentially circular or oval-shaped and have an open curvature on the side remote from the force.

3. A collision protection device as claimed in claim 1 or 2, characterised in that the stitched seams (4'') are single seams.

4. A collision protection device as claimed in claim 1 or 2, characterised in that the stitched seams (4, 4', 4''', 4'''') are multiple seams, in particular double seams.

5. A collision protection device as claimed in claim 4, characterised in that the bearing behaviour of the joining point is determined by means of the distance of the multiple seams (4, 4', 4''', 4'''') from one another.

6. A collision protection device as claimed in one of claims 1 to 5, characterised in that the bearing behaviour of the joining point is determined by means of the stitch length in the stitched seams (4, 4', 4'', 4''', 4'''').

7. A collision protection device as claimed in one of claims 1 to 6, characterised in that the seam shape is selected so that in the event of impact, force applied to the safety stop band (3, 3', 3'', 3''', 3'''') in the longitudinal direction is initially applied to the central region of its cross-section.

8. A collision protection device as claimed in one of claims 1 to 7, characterised in that the seam structure is of a shape which is conducive to the flow of force when force is applied to the safety stop band (3, 3', 3'', 3''', 3'''').

## Revendications

1. Dispositif de protection contre les chocs, pour passagers de véhicules, en particulier de véhicules automobiles, constitué
- d'un rembourrage ou d'une chappe de recouvrement, d'un sac d'air, d'une partie de fixation, de dispositifs électroniques ou mécaniques et d'un générateur de gaz,
- le sac d'air étant constitué de tissu avec ou sans revêtement, composé d'une partie inférieure (2, 2', 2'', 2''',2'''') avec orifice d'entrée du gaz et équipé également d'un pare-flammes, composé également d'une partie supérieure (1, 1'''') sous la forme d'une face d'impact du passager et d'une ou plusieurs bandes de reprise (3, 3', 3'', 3''', 3''''), réalisées en une ou plusieurs couches,
- les extrémités de la ou des bandes de reprise (3, 3', 3'', 3''', 3'''') étant reliées, par des cordons de couture, à la partie supérieure (1, 1''''), à la partie inférieure (2, 2', 2'', 2''',2''''), à d'autres constituants, ou entre elles, dans le cas de bandes de reprise en plusieurs couches.
caractérisé en ce que les cordons de couture (4, 4' , 4'', 4''', 4'''') sont chaque fois réalisés à l'intérieur des extrémités de la ou des bandes de reprise (3, 3', 3'', 3''', 3'''') essentiellement en formant un cercle ou un ovale comportant un tracé fermé.

2. Dispositif de protection contre les chocs, pour passagers de véhicules, en particulier de véhicules automobiles, constitué de
- d'un rembourrage ou d'une chappe de recouvrement, d'un sac d'air, de pièces de fixation, de dispositifs électroniques ou mécaniques et d'un générateur de gaz,
- le sac d'air étant constitue de tissu avec ou sans revêtement, composé d'une partie inférieure (2, 2', 2'', 2''',2'''') avec orifice d'entrée du gaz et équipé également d'un pare-flamines, composé également d'une partie supérieure (1, 1'''') sous la forme d'une face d'impact du passager et d'une ou plusieurs bandes de reprise (3, 3', 3'', 3''', 3''''), réalisées en une ou plusieurs couches,
- les extrémités de la ou des bandes de reprise (3, 3', 3'', 3''', 3'''') étant reliées par des cordons de couture à la partie supérieure (1, 1''''), à la partie inférieure (2, 2', 2'', 2''',2''''), à d'autres constituants, ou entre elles, dans le cas de bandes de reprise en plusieurs couches.
caractérisé en ce que les cordons de couture (4, 4', 4'', 4''', 4'''') sont chaque fois réalisés à l'intérieur des extrémités de la ou des bandes de reprise (3, 3', 3'', 3''', 3'''') essentiellement en formant un cercle ou un ovale comportant un tracé ouvert sur la face opposée à l'effort.

3. Dispositif de protection contre les chocs suivant la revendication 1 ou la revendication 2, caractérisé en ce que les cordons de couture (4'''') sont des cordons simples.

4. Dispositif de protection contre les chocs suivant la revendication 1 ou la revendication 2, caractérisé en ce que les cordons de couture (4, 4', 4''', 4'''') sont des cordons multiples, en particulier des cordons doubles.

5. Dispositif de protection contre les chocs suivant la revendication 4, caractérisé en ce que le comportement porteur du point de liaison est déterminé en fonction de la distance des cordons de couture multiples (4, 4' 4''', 4'''') les uns par rapport aux autres.

6. Dispositif de protection contre les chocs suivant l'une des revendications 1 à 5, caractérisé en ce que le comportement porteur du point de liaison est déterminé en fonction de la longueur de piqure dans les cordons de couture (4, 4', 4'', 4''', 4'''').

7. Dispositif de protection contre les chocs suivant l'une des revendications 1 à 6, caractérisé en ce que la forme du cordon de couture est choisie de telle façon que la bande de reprise (3, 3', 3'', 3''', 3''''), sous l'effet de la force dans le sens longitudinal, soit d'abord soumise à l'effort dans la zone du milieu de sa section.

8. Dispositif de protection contre les chocs suivant l'une des revendications 1 à 7, caractérisé en ce que la structure du cordon de couture provoque une forme de la bande de reprise (3, 3', 3'', 3''', 3''''), soumise à l'effet de la force, qui est favorable au flux de la force.
